# EUROPÄISCHE PATENTANMELDUNG

(11) **EP 3 608 861 A1**
(43) Veröffentlichungstag der Anmeldung: **12.02.2020**
(21) Anmeldenummer: 18187458.7
(22) Anmeldetag: 06.08.2018
(51) Int. Cl.: G06Q 30/00

(54) **VERFAHREN ZUM ERWERB VON WAREN, ZUGANGSBERECHTIGUNGEN ODER BERECHTIGUNGEN ZUR INANSPRUCHNAHME EINER LEISTUNG ODER DIENSTLEISTUNG AUS EINER MEHRZAHL ANGEBOTENER WAREN, ZUGANGSBERECHTIGUNGEN ODER BERECHTIGUNGEN ZUR INANSPRUCHNAHME EINER LEISTUNG ODER DIENSTLEISTUNG**

(71) Anmelder: SKIDATA AG, 5083 Grödig/Salzburg (AT)
(72) Erfinder: Dr. HAIDACHER, Martin, 5020 Salzburg (AT); AIGNER, Roland, 5400 Hallein/Rif (AT)
(74) Vertreter: Karakatsanis, Georgios

(57) **Zusammenfassung**

Verfahren zum Erwerb von Waren, Zugangsberechtigungen oder Berechtigungen zur Inanspruchnahme einer Leistung oder Dienstleistung aus einer Mehrzahl angebotener Waren, Zugangsberechtigungen oder Berechtigungen zur Inanspruchnahme einer Leistung oder Dienstleistung, dadurch gekennzeichnet, dass ein definierter räumlicher Bereich in definierten, jeweils einer erwerbbaren Ware, Zugangsberechtigung oder Berechtigung zur Inanspruchnahme einer Leistung oder Dienstleistung zugeordneten Unterbereichen unterteilt wird und dass eine Ware, Zugangsberechtigung oder Berechtigung zur Inanspruchnahme einer Leistung oder Dienstleistung aus einer Mehrzahl angebotener Waren, Zugangsberechtigungen oder Berechtigungen zur Inanspruchnahme einer Leistung oder Dienstleistung dadurch erworben wird, dass ein vorab zur Durchführung des Verfahrens anhand biometrischer Merkmale und/oder anhand von Merkmalen, welche dem Benutzer eindeutig zugeordnet werden können registrierter Benutzer oder ein vorab zur Durchführung des Verfahrens registrierter Gegenstand im der zu erwerbenden Ware, Zugangsberechtigung oder Berechtigung zur Inanspruchnahme einer Leistung oder Dienstleistung zugeordneten definierten Unterbereich (1, 2, 3) identifiziert und lokalisiert wird.

## Beschreibung

Die vorliegende Erfindung bezieht sich auf ein Verfahren zum Erwerb von Waren, Zugangsberechtigungen oder Berechtigungen zur Inanspruchnahme einer Leistung oder Dienstleistung aus einer Mehrzahl angebotener Waren, Zugangsberechtigungen oder Berechtigungen zur Inanspruchnahme einer Leistung oder Dienstleistung, gemäß dem Oberbegriff des Patentanspruchs 1. Ferner betrifft die Erfindung ein System zum Erwerb von Waren, Zugangsberechtigungen oder Berechtigungen zur Inanspruchnahme einer Leistung oder Dienstleistung aus einer Mehrzahl angebotener Waren, Zugangsberechtigungen oder Berechtigungen zur Inanspruchnahme einer Leistung oder Dienstleistung.

Aus dem Stand der Technik ist bekannt, Zugangsberechtigungen oder Berechtigungen zur Inanspruchnahme einer Leistung oder Dienstleistung vordem Besuch einer Einrichtung oder der Inanspruchnahme einer Dienstleistung aktiv zu erwerben, beispielsweise über das Internet mittels internetfähiger elektronischer Geräte. Hierbei resultiert die erforderliche Betätigung der elektronischen Geräte in Zeitverlust und Stress. Alternativ können Zugangsberechtigungen oder Berechtigungen zur Inanspruchnahme einer Leistung oder Dienstleistung durch Betätigung eines Automaten oder an einer Kassa erworben werden, was in nachteiliger Weise ebenfalls in Zeitverlust und Stress resultieren kann.

Der vorliegenden Erfindung liegt die Aufgabe zugrunde, ein Verfahren zum Erwerb von Waren, Zugangsberechtigungen oder Berechtigungen zur Inanspruchnahme einer Leistung oder Dienstleistung aus einer Mehrzahl angebotener Waren, Zugangsberechtigungen oder Berechtigungen zur Inanspruchnahme einer Leistung oder Dienstleistung anzugeben, durch dessen Durchführung der Komfort für die Benutzer erhöht wird. Des Weiteren soll ein System zum Erwerb von Waren, Zugangsberechtigungen oder Berechtigungen zur Inanspruchnahme einer Leistung oder Dienstleistung aus einer Mehrzahl angebotener Waren, Zugangsberechtigungen oder Berechtigungen zur Inanspruchnahme einer Leistung oder Dienstleistung angegeben werden.

Diese Aufgabe wird für ein Verfahren durch die Merkmale des Patentanspruchs 1 gelöst. Ein System ist Gegenstand des Patentanspruchs 18.

Demnach wird ein Verfahren zum Erwerb von Waren, Zugangsberechtigungen oder Berechtigungen zur Inanspruchnahme einer Leistung oder Dienstleistung aus einer Mehrzahl angebotener Waren, Zugangsberechtigungen oder Berechtigungen zur Inanspruchnahme einer Leistung oder Dienstleistung vorgeschlagen, im Rahmen dessen ein definierter räumlicher Bereich in definierten, jeweils einer erwerbbaren Ware, Zugangsberechtigung oder Berechtigung zur Inanspruchnahme einer Leistung oder Dienstleistung zugeordneten Unterbereichen unterteilt wird. Gemäß der Erfindung wird eine Ware, eine Zugangsberechtigung oder Berechtigung zur Inanspruchnahme einer Leistung oder Dienstleistung aus einer Mehrzahl angebotener Waren, Zugangsberechtigungen oder Berechtigungen zur Inanspruchnahme einer Leistung oder Dienstleistung dadurch erworben, dass ein vorab zur Durchführung des Verfahrens anhand biometrischer Merkmale und/oder anhand von Merkmalen, welche dem Benutzer eindeutig zugeordnet werden können registrierter Benutzer oder ein vorab zur Durchführung des Verfahrens registrierter Gegenstand im der zu erwerbenden Ware, Zugangsberechtigung oder Berechtigung zur Inanspruchnahme einer Leistung oder Dienstleistung zugeordneten definierten Unterbereich identifiziert und lokalisiert wird.

Ein vorab zur Durchführung des Verfahrens registrierter Gegenstand ist ein von einer Person bei sich befindlicher Gegenstand, beispielsweise ein mobiles elektronisches Gerät, oder ein Fahrzeug. Das mobile elektronische Gerät kann z.B. ein Smartphone oder ein in ein Fahrzeug integriertes elektronisches Modul zur drahtlosen Kommunikation sein.

Die definierten Unterbereiche sind beispielsweise in der Nähe der Zugangskontrollvorrichtungen zur Überprüfung der Gültigkeit der erwerbbaren Zugangsberechtigungen bzw. der Eingänge oder Ausgänge zu einem eine erwerbbare Zugangsberechtigung erfordernden Bereich oder in der Nähe der Orte der Erbringung der erwerbbaren Leistungen oder Dienstleistungen vorgesehen. Auch können die Unterbereiche vor Bahnsteigen, an Eingängen von Bus-oder Trambahnen, an Eingängen von Skigebieten oder an Ein-und/oder Ausfahrten von Parkplätzen und Parkhäusern vorgesehen sein.

Der Erwerb erfolgt nach der Identifizierung und Lokalisierung eines vorab zur Durchführung des Verfahrens registrierten Benutzers oder eines vorab zur Durchführung des Verfahrens registrierten Gegenstandes in einem Unterbereich, wobei die Identifizierung und Lokalisierung anhand der Erfassung zumindest eines dem Benutzer zugeordneten eindeutigen Merkmals oder zumindest einer dem Gegenstand zugeordneten eindeutigen ID mittels geeigneter mit einem Server verbundener Einrichtungen zur Identifizierung und Lokalisierung erfolgt, und wobei dem dem vorab registrierten Benutzer zugeordneten eindeutigen Merkmal oder der dem vorab registrierten Gegenstand zugeordneten eindeutigen ID im Server Bezahlinformationen zugeordnet sind, welche im Server abgelegt sind und zur Abwicklung der Bezahlung für den Erwerb einer Ware, einer Zugangsberechtigung oder die Berechtigung zur Inanspruchnahme einer Leistung oder Dienstleistung verwendet werden. Die Bezahlinformationen können beispielsweise Kreditkartendaten, Kontodaten oder ein Guthaben sein.

Gemäß der Erfindung ist für die Unterbereiche optional eine für die Benutzer sichtbare und als solche gekennzeichnete Validierungslinie vorgesehen, wobei die Bezahlung erst dann erfolgt, wenn ein vorab registrierter Benutzer oder ein von einer Person bei sich befindlicher vorab registrierter Gegenstand nach einem Unterbereich die Validierungslinie überschreitet; durch das Überschreiten der Validierungslinie wird der Erwerb einer Ware, einer Zugangsberechtigung oder einer Berechtigung zur Inanspruchnahme einer Leistung oder Dienstleistung bestätigt. Mehrere benachbarte Unterbereiche können eine gemeinsame Validierungslinie aufweisen.

Wenn keine Validierungslinie vorgesehen ist, erfolgt der Erwerb automatisch oder nach Ablauf einer vorgegebenen Zeit des Aufenthaltes eines Benutzers oder eines von einer Person bei sich befindlichen Gegenstandes in einem Unterbereich.

Gemäß einer weiteren Ausgestaltung der Erfindung erfolgt die Bezahlung erst dann, wenn vorgegebene Bewegungsmuster oder Gesten einer Hand eines vorab registrierten Benutzers oder einer Person, die einen vorab registrierten Gegenstand bei sich trägt, während des Aufenthalts in einem Unterbereich erkannt werden, die als Bestätigung dienen. Zu diesem Zweck werden Bilder von Kameras, welche die Unterbereiche abdecken, von einer mit dem Server verbundenen Auswerteeinheit ausgewertet. Für den Fall, dass Kameras zur Lokalisierung und Identifizierung verwendet werden können die erforderlichen Aufnahmen durch diese ohnehin vorhandenen Kameras erstellt werden.

Vor dem Erwerb einer Ware, einer Zugangsberechtigung oder Berechtigung zur Inanspruchnahme einer Leistung oder Dienstleistung wird gemäß einer weiteren Ausgestaltung geprüft, ob diese Ware, Zugangsberechtigung oder Berechtigung zur Inanspruchnahme einer Leistung oder Dienstleistung von der identifizierten Person innerhalb einer vorgegebenen Zeitspanne vor der aktuellen Zeit bereits erworben ist, wobei, wenn dies der Fall ist, kein Erwerb durchgeführt wird.

Gemäß einer Weiterbildung der Erfindung kann für jeden Unterbereich, insbesondere für einen Unterbereich ohne eine Validierungslinie eine für die Benutzer sichtbare und als solche gekennzeichnete "Cancel" - Linie vorgesehen sein, durch deren Überschreiten innerhalb einer vorgegebenen Zeitspanne eine Stornierung des Vorganges, d.h. des Erwerbs einer Ware, einer Zugangsberechtigung oder einer Berechtigung zur Inanspruchnahme einer Leistung oder Dienstleistung durchgeführt wird.

Das Überschreiten der Validierungslinie und der Cancel-Linie wird anhand der im Folgenden beschriebenen Identifizierungs- und Lokalisierungsmethoden für die Unterbereiche detektiert.

Gemäß einer weiteren Ausgestaltung der Erfindung wird der aktuelle Vorgang, d.h. der Erwerb einer Ware, einer Zugangsberechtigung oder einer Berechtigung zur Inanspruchnahme einer Leistung oder Dienstleistung storniert, wenn vorgegebene Bewegungsmuster oder Gesten einer Hand eines vorab registrierten Benutzers oder einer Person, die einen vorab registrierten Gegenstand bei sich trägt, während des Aufenthalts in einem Unterbereich erkannt werden. Zu diesem Zweck werden Bilder von Kameras, welche die Unterbereiche abdecken, von einer mit dem Server verbundenen Auswerteeinheit ausgewertet. Für den Fall, dass Kameras zur Lokalisierung und Identifizierung verwendet werden können die erforderlichen Aufnahmen durch diese ohnehin vorhandenen Kameras erstellt werden.

Gemäß einer weiteren Ausgestaltung der Erfindung kann, vorzugsweise wenn keine Cancel-Linie und keine Validierungslinie vorgesehen ist, ein Stornieren des Vorgangs d.h. des Erwerbs einer Zugangsberechtigung oder einer Berechtigung zur Inanspruchnahme einer Leistung oder Dienstleistung durch das Verlassen eines Unterbereichs innerhalb einer vorgegebenen Zeitspanne durchgeführt werden. Dies ist beispielsweise wichtig, wenn eine Dienstleistung direkt in einem Unterbereich in Anspruch genommen wird, was beispielsweise beim elektrischen Laden von Autos der Fall sein kann.

Optional kann vor den Unterbereichen ein Identifizierungsbereich vorgesehen sein, der durchschritten werden muss, um zu einem Unterbereich zu gelangen. Wenn sich eine vorab registrierte Person oder eine Person, die einen vorab registrierten Gegenstand bei sich trägt im Identifizierungsbereich befindet, wird eine Lokalisierung und Identifizierung durchgeführt, wodurch der Vorgang des Erwerbs einer Ware, einer Zugangsberechtigung oder einer Berechtigung zur Inanspruchnahme einer Leistung oder Dienstleistung, wenn sich die Person oder der Gegenstand im einem Unterbereich befindet, beschleunigt werden kann, da die zur Durchführung des Erwerbs erforderlichen Daten bereits vorliegen; dies kann insbesondere dann relevant sein, wenn eine hohe Personendichte zu erwarten ist, beispielsweise bei öffentlichen Verkehrsmitteln. Hierbei wird nach der Lokalisierung und Identifizierung einer Person oder eines Gegenstandes ein Tracking durchgeführt, um zu ermitteln, ob sich die Person oder der Gegenstand anschließend in einem Unterbereich befinden. Das Tracking erfolgt mittels des im Folgenden beschriebenen Verfahrens zur Lokalisierung einer Person oder eines Gegenstandes über die mit dem Server verbundene Mittel zur Identifizierung und Lokalisierung.

Die Unterbereiche, der Identifizierungsbereich, die Validierungslinie und die Cancel-Linie sind vorzugsweise farblich hervorgehoben, um die Kundenfreundlichkeit des Verfahrens zu erhöhen.

Gemäß der Erfindung können die Benutzer mittels Anzeigevorrichtungen über die Zuordnung der Unterbereiche zu den erwerbenden Waren, Zugangsberechtigungen oder Berechtigungen zur Inanspruchnahme einer Leistung oder Dienstleistung informiert werden. Die Anzeigevorrichtungen können beispielsweise über den Unterbereichen angeordnet oder als in die Unterbereiche integrierte LED-Piktogramme ausgeführt sein. Um eine hohe Flexibilität hinsichtlich der Zuordnung der Unterbereiche zu gewährleisten, können die Anzeigevorrichtungen mit dem Server verbunden und von diesem ansteuerbar sein.

Nach dem Erwerb einer Ware, einer Zugangsberechtigung oder Berechtigung zur Inanspruchnahme einer Leistung oder Dienstleistung wird im Server ein entsprechender Eintrag gespeichert und dem Benutzer zugeordneten eindeutigen Merkmal oder der dem Gegenstand zugeordneten eindeutigen ID zugeordnet.

Für den Fall eines vorab registrierten Benutzers erfolgt die Identifizierung und Lokalisierung vorzugsweise dadurch, dass mittels Kameras, welche den jeweiligen Unterbereich und falls vorgesehen den Identifizierungsbereich abdecken, optische Daten der im Unterbereich anwesenden Personen erfasst werden, die biometrische Merkmale und/oder Merkmale sind, welche den erfassten Personen eindeutig zugeordnet werden können, wobei die erfassten Daten mit in einem Server abgelegten, den vorab registrierten Benutzern bei der Registrierung zugeordneten eindeutigen Merkmalen verglichen werden, wobei bei Übereinstimmung der erfassten Daten mit im Server abgelegten Merkmalen ein registrierter Benutzer erkannt wird. Anhand der Daten der Kameras über die Anwesenheit des Benutzers wird dieser lokalisiert und einem der Unterbereiche oder dem Identifizierungsbereich zugeordnet.

Hierbei kann den Unterbereichen und dem Identifizierungsbereich jeweils zumindest eine Kamera zugeordnet sein. Alternativ kann zumindest eine Kamera mehrere Unterbereiche und/oder den Identifizierungsbereich abdecken.

Hierbei kann beispielsweise mittels der Kameras eine Gesichtserkennung durchgeführt werden; auch kann mittels eines neuronalen Netzwerks ein Zahlenvektor erzeugt werden, welcher das aufgenommene Gesicht repräsentiert. Gemäß einer weiteren Ausgestaltung kann bei einer ausreichend hohen Auflösung der Kameras die Retina der Personen gescannt werden und das Ergebnis als biometrisches Merkmal verwendet werden. Analog wird für den Fall eines Fahrzeugs ohne ein in das Fahrzeug integriertes elektronisches Modul zur drahtlosen Kommunikation vorgegangen, wobei das Fahrzeug mittels Kameras anhand eines eindeutigen Merkmals, beispielsweise des Kennzeichens oder anhand einer Kombination von Merkmalen identifiziert und lokalisiert wird.

Mittels mit diesen Kameras verbundener Auswerteeinheiten können auch vorgegebene Bewegungsmuster oder Gesten einer Hand eines vorab registrierten Benutzers oder einer Person, die einen vorab registrierten Gegenstand bei sich trägt, während des Aufenthalts in einem Unterbereich erkannt werden, wodurch der aktuelle Vorgang bestätigt oder storniert werden kann. Beispielsweise kann bei Erkennen einer "Daumen hoch" Geste der aktuelle Vorgang bestätigt werden, wobei bei Erkennen einer "Daumen runter" Geste der aktuelle Vorgang storniert werden kann.

Gemäß einer Weiterbildung der Erfindung kann die gewünschte Anzahl der zu erwerbenden Waren, Zugangsberechtigungen oder Berechtigungen zur Inanspruchnahme einer Leistung oder Dienstleistung anhand der Erkennung mittels mit Kameras verbundener Auswerteeinheiten vorgegebener Bewegungsmuster oder Gesten einer Hand oder beider Hände eines vorab registrierten Benutzers oder einer Person, die einen vorab registrierten Gegenstand bei sich trägt, während des Aufenthalts in einem Unterbereich erkannt werden. Beispielsweise kann die Anzahl der gezeigten Finger der Anzahl der gewünschten zu erwerbenden Waren, Zugangsberechtigungen oder Berechtigungen zur Inanspruchnahme einer Leistung oder Dienstleistung entsprechen, wobei für den Erwerb lediglich einer Ware, Zugangsberechtigung oder Berechtigung zur Inanspruchnahme einer Leistung oder Dienstleistung keine Geste erforderlich ist.

Wenn die Unterbereiche und falls vorgesehen der Identifizierungsbereich von einem GNSS (Global Navigation Satellite System)-Signal, beispielsweise von einem GPS, Galileo oder Glonass -Signal abgedeckt sind, erfolgt die Identifizierung und Lokalisierung für den Fall eines mobilen elektronischen Gerätes anhand der GNSS - Daten des GNSS -Moduls (beispielsweise für den Fall von GPS-Daten des GPS-Moduls) des mobilen elektronischen Gerätes oder für den Fall, dass das mobile elektronische Gerät ein in ein Fahrzeug integriertes elektronisches Modul zur drahtlosen Kommunikation ist, des GNSS -Moduls des Fahrzeugs, die über eine Verbindung zur drahtlosen Datenkommunikation nach einem Standard zur drahtlosen Kommunikation, der beispielsweise ein BLE-, GSM-, WLAN- oder UWB-Standard sein kann, an den Server über mit dem Server verbundene Sende-Empfangseinheiten, welche die Unterbereiche abdecken, zusammen mit einer dem mobilen elektronischen Gerät zugeordneten eindeutigen ID, beispielsweise der IMEI - Nummer des mobilen elektronischen Gerätes, übermittelt werden. Die übermittelte ID wird mit in einem Server abgelegten, den vorab registrierten mobilen elektronischen Geräten zugeordneten IDs verglichen, die bei der Registrierung angegeben worden sind, wobei bei Übereinstimmung der übermittelten ID mit einer im Server abgelegten ID ein registriertes mobiles elektronisches Gerät erkannt wird.

Alternativ oder wenn die Unterbereiche und falls vorgesehen der Identifizierungsbereich nicht von einem GNSS -Signal abgedeckt sind, was beispielsweise in einigen U-Bahnhöfen der Fall sein kann, können die mobilen elektronischen Geräte oder in ein Fahrzeug integrierte elektronische Module zur drahtlosen Kommunikation mittels mit dem Server verbundener Mittel zur Detektion von mobilen elektronischen Geräten, welche die Unterbereiche abdecken, über einen Standard zur drahtlosen Kommunikation, beispielsweise über WLAN, BLE- oder UWB identifiziert und lokalisiert werden.

Hierbei kann die Identifizierung und Lokalisierung dadurch erfolgen, dass anhand einer Referenzsignalstärke, die in der Regel der Signalstärke in einem Meter Entfernung entspricht und die als Information im Signal des mobilen elektronischen Geräts oder eines in ein Fahrzeug integrierten elektronischen Moduls zur drahtlosen Kommunikation zusammen mit einer dem mobilen elektronischen Gerät zugeordneten eindeutigen ID enthalten ist oder in Abhängigkeit vom mobilen elektronischen Gerät, z.B. vom Typ des Mobiltelefons, in einer im Server gespeicherten Tabelle abgelegt ist, der Abstand zwischen dem mobilen elektronischen Gerät oder dem in ein Fahrzeug integrierten elektronischen Modul und BLE-, UWB-, oder WLAN- Sende-Empfangseinheiten ermittelt wird, wobei anschließend eine Trilateration bzw. bei mehr als drei Sende-Empfangseinheiten eine Multilateration durchgeführt wird. Die übermittelte ID wird mit in einem Server abgelegten, den vorab registrierten mobilen elektronischen Geräten zugeordneten IDs verglichen, die bei der Registrierung angegeben worden sind, wobei bei Übereinstimmung der übermittelten ID mit einer im Server abgelegten ID ein registriertes mobiles elektronisches Gerät bzw. in ein Fahrzeug integriertes elektronisches Modul erkannt wird.

Gemäß der Erfindung können einige oder sämtliche Unterbereiche sequenziell durchschritten werden, um eine Kombination aus verschiedenen Waren, Zugangsberechtigungen oder Berechtigungen zur Inanspruchnahme einer Leistung oder Dienstleistung zu erwerben.

Gemäß einer Weiterbildung der Erfindung kann zumindest ein Unterbereich mehreren Waren, Zugangsberechtigungen oder Berechtigungen zur Inanspruchnahme einer Leistung oder Dienstleistung zugeordnet sein, wobei die Auswahl der zu erwerbenden Ware, Zugangsberechtigung oder Berechtigung zur Inanspruchnahme einer Leistung oder Dienstleistung anhand der Erkennung mittels mit Kameras verbundener Auswerteeinheiten vorgegebener Bewegungsmuster oder Gesten einer Hand oder beider Hände eines vorab registrierten Benutzers oder einer Person, die einen vorab registrierten Gegenstand bei sich trägt, während des Aufenthalts in diesem Unterbereich erkannt wird.

Hierbei ist jeder der Waren, Zugangsberechtigungen oder Berechtigungen zur Inanspruchnahme einer Leistung oder Dienstleistung, den der Unterbereich zugeordnet ist, eine Geste bzw. ein Bewegungsmuster zugeordnet. Ferner kann die Anzahl der zu erwerbenden Waren, Zugangsberechtigungen oder Berechtigungen zur Inanspruchnahme einer Leistung oder Dienstleistung wie bereits erläutert, anhand der Erkennung von der Anzahl zugeordneten Bewegungsmustern oder Gesten einer Hand oder beider Hände eines vorab registrierten Benutzers oder einer Person, die einen vorab registrierten Gegenstand bei sich trägt, erkannt werden.

Hierbei kann für einen derartigen Unterbereich eine Standardware bzw. eine Standard Zugangsberechtigung oder Berechtigung zur Inanspruchnahme einer Leistung oder Dienstleistung definiert werden, zu deren Erwerb kein Bewegungsmuster bzw. keine Geste erforderlich ist.

Beispielsweise kann ein Unterbereich im Bereich eines Einsteigebereichs eines Verkehrsmittels Tageskarten für einen, zwei, oder drei Tage zugeordnet sein, wobei durch das Zeigen von zwei Fingern oder durch eine weitere Geste eine Zwei-Tageskarte und durch das Zeigen von drei Fingern oder durch eine weitere Geste eine Drei-Tageskarte gekauft werden kann.

In einem derartigen Unterbereich können mehrere unterschiedliche Waren, Zugangsberechtigungen oder Berechtigungen zur Inanspruchnahme einer Leistung oder Dienstleistung sequentiell erworben werden. Beispielsweise können drei Bier und zwei Orangensäfte mit der Abfolge des Zeigens der Geste für Bier gefolgt von dem Zeigen von drei Fingern, gefolgt von dem Zeigen der Geste für Orangensaft gefolgt von dem Zeigen von zwei Fingern erworben werden.

Für den Fall, dass die Unterbereiche unmittelbar vor einem Automaten vorgesehen sind, kann über eine separate oder in den Automaten integrierte Anzeigevorrichtung die aktuelle Auswahl angezeigt werden, wobei durch Zeigen beider Handinnenflächen in Richtung des Automaten oder durch eine "Daumen runter" Geste die Auswahl storniert wird. Die Kameras zur Erfassung der Gesten bzw. Bewegungsmuster können hierbei auch in den Automaten integriert sein. Nach Bezahlung der Bestellung werden die Waren über den Automaten ausgegeben.

Die Anzahl der Unterbereiche kann beliebig sein und hängt von den angebotenen Waren, Zugangsberechtigungen bzw. Berechtigungen zur Inanspruchnahme einer Leistung oder Dienstleistung ab. In einem Bereich eines Einsteigebereichs eines Verkehrsmittels können mehrere Unterbereiche vorgesehen sind, die jeweils dem Erwerb einer Ticketart zugeordnet sind. Beispielsweise können vor einem Bahnsteig eines U-Bahnhofs drei Unterbereiche vorgesehen sein, die jeweils dem Erwerb einer Tageskarte, eines Kurzstreckentickets und eines Langstreckentickets zugeordnet sind. Bei einem Skigebiet können beispielsweise mehrere Unterbereiche vorgesehen sein, die jeweils dem Erwerb einer Ticketart zugeordnet sind; beispielsweise können Unterbereiche für einen Tagesskipass, für einen 2-Stunden Skipass, für einen 3-Stunden-Skipass etc. vorgesehen sein.

Ferner können bei Parkplätzen und Parkhäusern die Ein- oder Ausfahrten als Unterbereiche im Sinne der Erfindung ausgeführt sein, wobei unterschiedliche Ein- oder Ausfahrten unterschiedlichen Parkticketarten zugeordnet sind, wodurch eine komfortable Bezahlung der Parkgebühren ermöglicht wird. Durch die Wahl der Einfahrt, kann beispielsweise eine Wochenparkberechtigung oder ein Kurzparkticket erworben werden. Ferner können mittels des erfindungsgemäßen Verfahrens Kino- oder Konzertkarten erworben werden. Ein weiteres Anwendungsbeispiel ist der Erwerb von Waren, beispielsweise von Mahlzeiten in einem Schnellrestaurant oder in einer Mensa, wobei mehrere Unterbereiche vorgesehen sind, die jeweils einem Menü oder einer angebotenen Mahlzeit zugeordnet sind. Bei der Warenausgabe wird anhand der biometrischen Merkmale und/oder der Merkmale, welche dem Benutzer eindeutig zugeordnet werden können oder anhand der ID des mobilen elektronischen Gerätes die Bestellung der jeweiligen Person zugeordnet.

Das erfindungsgemäße Verfahren kann beispielsweise auch zur Entrichtung von Mautgebühren durchgeführt werden, wobei an einer Mautstelle jede Fahrspur einer Art fahrleistungs- oder zeitabhängiger Maut zugeordnet ist. Beispielsweise kann in Abhängigkeit der gewählten Fahrspur an der Mautstelle eine Jahreskarte, eine Wochenkarte, eine Einfachfahrt oder ein Round Trip Ticket erworben werden.

Für den Fall, dass die Unterbereiche an Ausfahrten von Parkplätzen und Parkhäusern vorgesehen sind, werden die einfahrenden vorab registrierten Fahrzeuge mittels an den Einfahrten vorgesehener Mittel zur Detektion von mobilen elektronischen Geräten über einen Standard zur mobilen Kommunikation, wenn in ein Fahrzeug ein integriertes elektronisches Modul zur drahtlosen Kommunikation vorgesehen ist oder mittels Kameras anhand des Kennzeichens identifiziert, wodurch die Berechnung der mittels des erfindungsgemäßen Verfahrens an der Ausfahrt zu entrichtenden Parkgebühren ermöglicht wird.

Gemäß einer Weiterbildung der Erfindung sind die Unterbereiche und falls vorhanden die Identifizierungsbereiche dynamisch in Abhängigkeit der Nachfrage für die erwerbbaren Waren, Zugangsberechtigungen oder Berechtigungen zur Inanspruchnahme einer Leistung oder Dienstleistung anpassbar. Dadurch wird eine hohe Flexibilität und ein hoher Komfort für die Benutzer gewährleistet. Dies wird dadurch erreicht, dass im Server die Parameter zur Definition der Unterbereiche und des Identifizierungsbereichs geändert werden, wobei die Steuerung der Mittel zur Identifizierung und Lokalisierung an die Parameter angepasst wird. Gemäß der Erfindung können Identifizierungsbereiche und Unterbereiche aktiviert und deaktiviert werden.

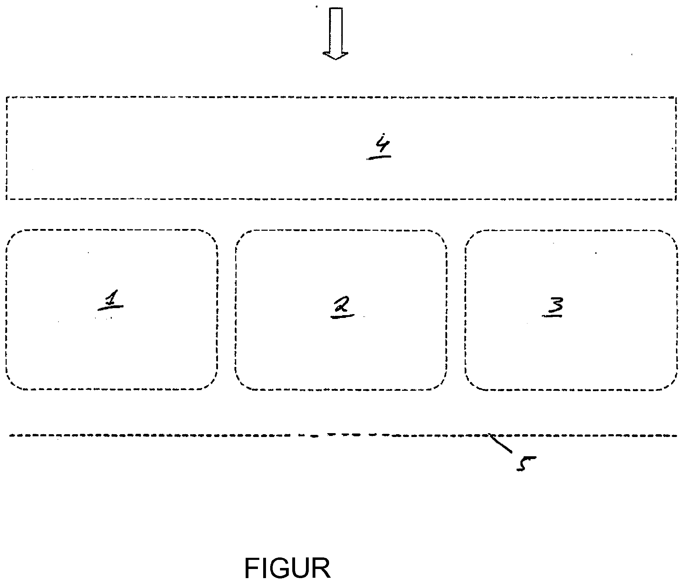

Die Erfindung wird im Folgenden anhand der beigefügten Figur beispielhaft näher erläutert.

In der Figur sind drei vor einem Bahnsteig eines U-Bahnhofs vorgesehene Unterbereiche 1, 2, 3 dargestellt, die jeweils dem Erwerb einer Tageskarte, eines Kurzstreckentickets und eines Langstreckentickets zugeordnet sind.
Ferner ist vor den drei Unterbereichen ein Identifizierungsbereich 4 vorgesehen, der in Pfeilrichtung durchschritten werden muss, um zu den Unterbereichen 1, 2, 3 zu gelangen. Die Unterbereiche 1, 2, 3 und der Identifizierungsbereich 4 sind bei dem gezeigten Beispiel von GNSS -Signalen abgedeckt.

Gemäß der Erfindung wird eine Tageskarte, ein Kurzstreckenticket oder ein Langstreckenticket dadurch erworben, dass ein vorab zur Durchführung des Verfahrens anhand biometrischer Merkmale und/oder anhand von Merkmalen, welche dem Benutzer eindeutig zugeordnet werden können registrierter Benutzer oder ein vorab zur Durchführung des Verfahrens registrierter von einer Person bei sich befindlicher Gegenstand, beispielsweise ein Mobiltelefon im jeweiligen Unterbereich 1, 2, 3 identifiziert und lokalisiert wird.

Beim gezeigten Beispiel werden vorab zur Durchführung des Verfahrens registrierte Benutzer oder vorab zur Durchführung des Verfahrens registrierte von einer Person bei sich befindliche Gegenstände im Identifizierungsbereich 4 identifiziert und lokalisiert. Bei Personen erfolgt dies dadurch, dass mittels Kameras, welche den Identifizierungsbereich 4 und die Unterbereiche1, 2, 3 abdecken, optische Daten der im Identifizierungsbereich 4 anwesenden Personen erfasst werden, die biometrische Merkmale und/oder Merkmale sind, welche den erfassten Personen eindeutig zugeordnet werden können, wobei die erfassten Daten mit in einem Server abgelegten, den vorab registrierten Benutzern bei der Registrierung zugeordneten eindeutigen Merkmalen verglichen werden und wobei bei Übereinstimmung der erfassten Daten mit im Server abgelegten Merkmalen ein registrierter Benutzer erkannt wird. Nach der Identifizierung werden die identifizierten Personen mittels der Kameras getrackt, wobei, wenn sich eine identifizierte Person in einem der Unterbereiche 1, 2, 3 befindet, der identifizierten Person zugeordnete und im Server abgelegte Bezahlinformationen zur Abwicklung der Bezahlung für eine Tageskarte, ein Kurzstreckenticket oder ein Langstreckenticket verwendet werden. Die Bezahlinformationen können beispielsweise bei der Registrierung der Benutzer angegeben werden.

Bei dem gezeigten Beispiel ist nach Unterbereichen 1, 2, 3 in Richtung auf den Bahnsteig eine Validierungslinie 5 vorgesehen, durch deren Überschreiten seitens der vorher in einem Unterbereich 1, 2, 3 lokalisierten und vorab registrierten Personen der Erwerb eines dem jeweiligen Unterbereich 1, 2, 3 zugeordneten Tickets bestätigt wird. Die Validierungslinie wird hierbei durch zumindest eine Kamera abgedeckt.

Für den Fall eines vorab registrierten Mobiltelefons erfolgt die Identifizierung und Lokalisierung im Identifizierungsbereich 4 dadurch, dass anhand der GNSS -Daten des GNSS -Moduls des Mobiltelefons, die über eine Verbindung zur drahtlosen Datenkommunikation nach einem Standard zur drahtlosen Kommunikation, der beispielsweise ein BLE-, GSM-, WLAN- oder UWB- Standard sein kann, an den Server über mit dem Server verbundene Sende-Empfangseinheiten, welche den Identifizierungsbereich 4, die Unterbereiche 1, 2, 3 und die Validierungslinie 5 abdecken, zusammen mit einer dem Mobiltelefon zugeordneten eindeutigen ID, beispielsweise der IMEI - Nummer des mobilen elektronischen Gerätes, übermittelt werden. Die übermittelte ID wird mit im Server abgelegten, den vorab registrierten mobilen elektronischen Geräten zugeordneten IDs verglichen, die bei der Registrierung angegeben worden sind, wobei bei Übereinstimmung der übermittelten ID mit einer im Server abgelegten ID ein registriertes Mobiltelefon erkannt wird.

Nach der Identifizierung werden die Mobiltelefone anhand der GNSS -Daten des GNSS -Moduls der Mobiltelefone, die über die Verbindung zur drahtlosen Datenkommunikation an den Server über mit dem Server verbundene Sende-Empfangseinheiten übermittelt werden getrackt, wobei, wenn sich ein identifiziertes Mobiltelefon in einem der Unterbereiche 1, 2, 3 befindet, der ID des identifizierten Mobiltelefons zugeordnete und im Server abgelegte Bezahlinformationen zur Abwicklung der Bezahlung für eine Tageskarte, ein Kurzstreckenticket oder ein Langstreckenticket verwendet werden. Die Bezahlinformationen können beispielsweise bei der Registrierung der Mobiltelefone angegeben werden. Wenn die Person, die ein in einem Unterbereich 1, 2, 3 lokalisiertes Mobiltelefon bei sich trägt die Validierungslinie 5 überschreitet, was anhand der GNSS -Daten erkannt wird, wird der Erwerb eines Tickets, dem der jeweilige Unterbereich 1, 2, 3 zugeordnet ist, bestätigt.

Die Tickets werden in elektronischer Form an das Mobiltelefon übermittelt; alternativ wird nur in einer Datenbank des Servers das erworbene Ticket mit dem registrierten Benutzer oder mit dem registrierten Mobiltelefon verknüpft, so dass auch Benutzer ohne ein Mobiltelefon Tickets erwerben können.

## Patentansprüche

1. Verfahren zum Erwerb von Waren, Zugangsberechtigungen oder Berechtigungen zur Inanspruchnahme einer Leistung oder Dienstleistung aus einer Mehrzahl angebotener Waren, Zugangsberechtigungen oder Berechtigungen zur Inanspruchnahme einer Leistung oder Dienstleistung, **dadurch gekennzeichnet, dass** ein definierter räumlicher Bereich in definierten, jeweils einer erwerbbaren Ware, Zugangsberechtigung oder Berechtigung zur Inanspruchnahme einer Leistung oder Dienstleistung zugeordneten Unterbereichen unterteilt wird und dass eine Ware, Zugangsberechtigung oder Berechtigung zur Inanspruchnahme einer Leistung oder Dienstleistung aus einer Mehrzahl angebotener Waren, Zugangsberechtigungen oder Berechtigungen zur Inanspruchnahme einer Leistung oder Dienstleistung dadurch erworben wird, dass ein vorab zur Durchführung des Verfahrens anhand biometrischer Merkmale und/oder anhand von Merkmalen, welche dem Benutzer eindeutig zugeordnet werden können registrierter Benutzer oder ein vorab zur Durchführung des Verfahrens registrierter Gegenstand im der zu erwerbenden Ware, Zugangsberechtigung oder Berechtigung zur Inanspruchnahme einer Leistung oder Dienstleistung zugeordneten definierten Unterbereich (1, 2, 3) identifiziert und lokalisiert wird.

2. Verfahren nach Anspruch 1, **dadurch gekennzeichnet, dass** die Identifizierung und Lokalisierung anhand der Erfassung zumindest eines einem Benutzer zugeordneten eindeutigen Merkmals oder einer einem Gegenstand zugeordneten eindeutigen ID mittels geeigneter mit einem Server verbundener Mittel zur Identifizierung und Lokalisierung von Benutzern oder Gegenständen erfolgt, wobei dem dem Benutzer zugeordneten eindeutigen Merkmal oder der dem Gegenstand zugeordneten eindeutigen ID im Server Bezahlinformationen zugeordnet sind, welche im Server abgelegt sind und zur Abwicklung der Bezahlung für die Ware, die Zugangsberechtigung oder die Berechtigung zur Inanspruchnahme einer Leistung oder Dienstleistung verwendet werden.

3. Verfahren nach Anspruch 1 oder 2, **dadurch gekennzeichnet, dass** der Erwerb automatisch oder nach Ablauf einer vorgegebenen Zeit des Aufenthaltes eines Benutzers oder eines von einer Person bei sich befindlichen Gegenstandes in einem definierten Unterbereich (1, 2, 3) erfolgt.

4. Verfahren nach Anspruch 3, **dadurch gekennzeichnet, dass** ein Stornieren des Erwerbs einer Ware, einer Zugangsberechtigung oder einer Berechtigung zur Inanspruchnahme einer Leistung oder Dienstleistung durch das Verlassen des definierten Unterbereichs (1, 2, 3) innerhalb einer vorgegebenen Zeitspanne nach dem Erwerb durchgeführt wird.

5. Verfahren nach Anspruch 1 oder 2, **dadurch gekennzeichnet, dass** für die definierten Unterbereiche (1, 2, 3) eine für die Benutzer sichtbare und als solche gekennzeichnete Validierungslinie (5) vorgesehen ist, wobei die Bezahlung erst dann erfolgt, wenn ein vorab registrierter Benutzer oder ein von einer Person bei sich befindlicher vorab registrierter Gegenstand nach dem Aufenthalt in einem definierten Unterbereich (1, 2, 3) die Validierungslinie (5) überschreitet.

6. Verfahren nach Anspruch 1 oder 2, **dadurch gekennzeichnet, dass** die Bezahlung dann erfolgt, wenn vorgegebene Bewegungsmuster oder Gesten einer Hand eines vorab registrierten Benutzers oder einer Person, die einen vorab registrierten Gegenstand bei sich trägt, während des Aufenthalts in einem Unterbereich (1, 2, 3) erkannt werden, die als Bestätigung dienen, wobei zu diesem Zweck Bilder von Kameras, welche die Unterbereiche (1, 2, 3) abdecken, von einer mit dem Server verbundenen Auswerteeinheit ausgewertet werden.

7. Verfahren nach Anspruch 1, 2, 3, 4, 5 oder 6, **dadurch gekennzeichnet, dass** für die definierten Unterbereiche (1, 2, 3) eine für die Benutzer sichtbare und als solche gekennzeichnete Cancel-Linie vorgesehen ist, durch deren Überschreiten innerhalb einer vorgegebenen Zeitspanne eine Stornierung des Erwerbs einer Ware, einer Zugangsberechtigung oder einer Berechtigung zur Inanspruchnahme einer Leistung oder Dienstleistung durchgeführt wird.

8. Verfahren nach Anspruch 1, 2, 3, 4, 5 oder 6, **dadurch gekennzeichnet, dass** der Erwerb einer Ware, einer Zugangsberechtigung oder einer Berechtigung zur Inanspruchnahme einer Leistung oder Dienstleistung storniert wird, wenn vorgegebene Bewegungsmuster oder Gesten einer Hand eines vorab registrierten Benutzers oder einer Person, die einen vorab registrierten Gegenstand bei sich trägt, während des Aufenthalts in einem Unterbereich (1, 2, 3) erkannt werden, wobei zu diesem Zweck Bilder von Kameras, welche die Unterbereiche (1, 2, 3) abdecken, von einer mit dem Server verbundenen Auswerteeinheit ausgewertet werden.

9. Verfahren nach einem der vorangehenden Ansprüche , **dadurch gekennzeichnet, dass** vor den definierten Unterbereichen (1, 2, 3) ein Identifizierungsbereich (4) vorgesehen ist, der durchschritten werden muss, um zu den definierten Unterbereichen (1, 2, 3) zu gelangen, wobei, wenn sich ein vorab registrierter Benutzer oder ein vorab registrierter Gegenstand im Identifizierungsbereich (4) befindet, eine Lokalisierung und Identifizierung durchgeführt wird, wodurch der Vorgang des Erwerbs einer Ware, einer Zugangsberechtigung oder einer Berechtigung zur Inanspruchnahme einer Leistung oder Dienstleistung, wenn sich die Person oder der Gegenstand in einem definierten Unterbereich (1, 2, 3) befindet, beschleunigt werden kann und wobei nach der Lokalisierung und Identifizierung einer Person oder eines Gegenstandes ein Tracking mittels der mit einem Server verbundenen Mittel zur Identifizierung und Lokalisierung durchgeführt wird, um zu ermitteln, ob sich die Person oder der Gegenstand anschließend in einem definierten Unterbereich (1, 2, 3) befindet.

10. Verfahren nach einem der vorangehenden Ansprüche, **dadurch gekennzeichnet, dass** für den Fall eines vorab registrierten Benutzers die Identifizierung und Lokalisierung dadurch erfolgt, dass mittels Kameras, welche die Unterbereiche (1, 2, 3) und falls vorhanden den Identifizierungsbereich (4) abdecken, optische Daten der in diesen Bereichen (1, 2, 3, 4) anwesenden Personen erfasst werden, die biometrische Merkmale und/oder Merkmale sind, welche den erfassten Personen eindeutig zugeordnet werden können, wobei die erfassten Daten mit im Server abgelegten, den vorab registrierten Benutzern bei der Registrierung zugeordneten eindeutigen Merkmalen verglichen werden, wobei bei Übereinstimmung der erfassten Daten mit im Server abgelegten Merkmalen ein registrierter Benutzer erkannt wird und anhand der Daten der Kameras über die Anwesenheit des Benutzers lokalisiert und einem der Unterbereiche (1, 2, 3) oder dem Identifizierungsbereich (4) zugeordnet wird.

11. Verfahren nach Anspruch 10, **dadurch gekennzeichnet, dass** den Unterbereichen (1, 2, 3) und dem Identifizierungsbereich (4) jeweils zumindest eine Kamera zugeordnet ist und/oder dass zumindest eine Kamera mehrere Unterbereiche (1, 2, 3) und/oder den Identifizierungsbereich (4) abdeckt.

12. Verfahren nach einem der vorangehenden Ansprüche 1-9, **dadurch gekennzeichnet, dass**, wenn die Unterbereiche (1, 2, 3) und falls vorhanden der Identifizierungsbereich (4) von einem GNSS -Signal abgedeckt sind, die Identifizierung und Lokalisierung für den Fall eines mobilen elektronischen Gerätes anhand der GNSS -Daten eines GNSS -Moduls des mobilen elektronischen Gerätes oder für den Fall, dass das mobile elektronische Gerät ein in ein Fahrzeug integriertes elektronisches Modul zur drahtlosen Kommunikation ist, eines GNSS -Moduls des Fahrzeugs erfolgt, die über eine Verbindung zur drahtlosen Datenkommunikation nach einem Standard zur drahtlosen Kommunikation an den Server über mit dem Server verbundene Sende-Empfangseinheiten, welche die Unterbereiche (1, 2, 3) und falls vorhanden den Identifizierungsbereich (4) abdecken, zusammen mit einer dem mobilen elektronischen Gerät zugeordneten eindeutigen ID übermittelt werden, wobei die übermittelte ID mit im Server abgelegten, den vorab registrierten mobilen elektronischen Geräten zugeordneten IDs verglichen wird, und wobei bei Übereinstimmung der übermittelten ID mit einer im Server abgelegten ID ein registriertes mobiles elektronisches Gerät erkannt wird.

13. Verfahren nach einem der vorangehenden Ansprüche 1-9, **dadurch gekennzeichnet, dass** die Identifizierung und Lokalisierung für den Fall eines mobilen elektronischen Gerätes oder eines in ein Fahrzeug integrierten elektronischen Moduls zur drahtlosen Kommunikation mittels mit dem Server verbundener Mittel zur Detektion von mobilen elektronischen Geräten, welche den jeweiligen Unterbereich (1, 2, 3) und falls vorhanden den Identifizierungsbereich (4) abdecken, über einen Standard zur drahtlosen Kommunikation erfolgt, wobei an den Server die Detektion eines mobilen elektronischen Gerätes oder eines Moduls zur drahtlosen Kommunikation in einem Unterbereich (1, 2, 3) oder im Identifizierungsbereich (4) zusammen mit einer dem mobilen elektronischen Gerät oder dem Modul zur drahtlosen Kommunikation zugeordneten eindeutigen ID übermittelt werden.

14. Verfahren nach einem der vorangehenden Ansprüche, **dadurch gekennzeichnet, dass** die Größe der Unterbereiche (1, 2, 3) und falls vorhanden des Identifizierungsbereichs (4) dynamisch in Abhängigkeit der Nachfrage für die erwerbbaren Waren, Zugangsberechtigungen oder Berechtigungen zur Inanspruchnahme einer Leistung oder Dienstleistung angepasst wird.

15. Verfahren nach einem der vorangehenden Ansprüche, **dadurch gekennzeichnet, dass** einige oder sämtliche Unterbereiche (1, 2, 3) sequenziell durchschritten werden können, um eine Kombination aus verschiedenen Waren, Zugangsberechtigungen oder Berechtigungen zur Inanspruchnahme einer Leistung oder Dienstleistung zu erwerben.

16. Verfahren nach einem der vorangehenden Ansprüche, **dadurch gekennzeichnet, dass** die gewünschte Anzahl der zu erwerbenden Waren, Zugangsberechtigungen oder Berechtigungen zur Inanspruchnahme einer Leistung oder Dienstleistung anhand der Erkennung mittels mit Kameras verbundener Auswerteeinheiten vorgegebener Bewegungsmuster oder Gesten einer Hand oder beider Hände eines vorab registrierten Benutzers oder einer Person, die einen vorab registrierten Gegenstand bei sich trägt, während des Aufenthalts in einem Unterbereich erkannt wird.

17. Verfahren nach einem der vorangehenden Ansprüche, **dadurch gekennzeichnet, dass** die Benutzer mittels Anzeigevorrichtungen über die Zuordnung der Unterbereiche (1, 2, 3) zu den erwerbenden Waren, Zugangsberechtigungen oder Berechtigungen zur Inanspruchnahme einer Leistung oder Dienstleistung informiert werden.

18. System zum Erwerb von Waren, Zugangsberechtigungen oder Berechtigungen zur Inanspruchnahme einer Leistung oder Dienstleistung aus einer Mehrzahl angebotener Waren, Zugangsberechtigungen oder Berechtigungen zur Inanspruchnahme einer Leistung oder Dienstleistung, **dadurch gekennzeichnet, dass** es einen definierten räumlichen Bereich aufweist, der in definierten, jeweils einer erwerbbaren Ware, Zugangsberechtigung oder Berechtigung zur Inanspruchnahme einer Leistung oder Dienstleistung zugeordneten Unterbereichen (1, 2, 3) unterteilt ist, wobei eine Ware, eine Zugangsberechtigung oder Berechtigung zur Inanspruchnahme einer Leistung oder Dienstleistung aus einer Mehrzahl angebotener Waren, Zugangsberechtigungen oder Berechtigungen zur Inanspruchnahme einer Leistung oder Dienstleistung dadurch erwerbbar ist, dass ein vorab anhand biometrischer Merkmale und/oder anhand von Merkmalen, welche dem Benutzer eindeutig zugeordnet werden können registrierter Benutzer oder ein vorab registrierter Gegenstand im der zu erwerbenden Zugangsberechtigung oder Berechtigung zur Inanspruchnahme einer Leistung oder Dienstleistung definierten Unterbereich (1, 2, 3) identifiziert und lokalisiert wird und wobei Mittel zur Identifizierung und Lokalisierung von Benutzern oder Gegenständen in den Unterbereichen (1, 2, 3) vorgesehen sind.

19. System nach Anspruch 18, **dadurch gekennzeichnet, dass** vor den definierten Unterbereichen (1, 2, 3) ein Identifizierungsbereich (4) vorgesehen ist, der durchschritten werden muss, um zu den definierten Unterbereichen (1, 2, 3) zu gelangen, wobei, wenn sich ein vorab registrierter Benutzer oder ein vorab registrierter Gegenstand im Identifizierungsbereich (4) befindet, eine Lokalisierung und Identifizierung durchgeführt wird, wodurch der Vorgang des Erwerbs einer Ware, einer Zugangsberechtigung oder einer Berechtigung zur Inanspruchnahme einer Leistung oder Dienstleistung, wenn sich die Person oder der Gegenstand in einem definierten Unterbereich (1, 2, 3) befindet, beschleunigt werden kann und wobei nach der Lokalisierung und Identifizierung einer Person oder eines Gegenstandes ein Tracking mittels der mit einem Server verbundenen Mittel zur Identifizierung und Lokalisierung durchgeführt wird, um zu ermitteln, ob sich die Person oder der Gegenstand anschließend in einem definierten Unterbereich (1, 2, 3) befindet.

20. System nach Anspruch 18 oder 19, **dadurch gekennzeichnet, dass** die Größe der Unterbereiche (1, 2, 3) und falls vorhanden des Identifizierungsbereichs (4) dynamisch in Abhängigkeit der Nachfrage für die erwerbbaren Zugangsberechtigungen oder Berechtigungen zur Inanspruchnahme einer Leistung oder Dienstleistung anpassbar ist.

21. System nach Anspruch 18, 19 oder 20, **dadurch gekennzeichnet, dass** es in einem Bereich eines Einsteigebereichs eines Verkehrsmittels implementiert ist, wobei mehrere Unterbereiche vorgesehen sind, die jeweils dem Erwerb einer Ticketart zugeordnet sind oder dass es in einem Bereich eines Skigebiets implementiert ist, wobei mehrere Unterbereiche vorgesehen sind, die jeweils dem Erwerb eines Skipassart zugeordnet sind oder dass es in einem Parkhaus implementiert ist, wobei unterschiedliche Einfahrten unterschiedlichen Parkticketarten zugeordnet sind oder dass es in einem Schnellrestaurant oder in einer Mensa implementiert ist, wobei mehrere Unterbereiche vorgesehen sind, die jeweils einem Menü oder einer angebotenen Mahlzeit zugeordnet sind oder dass es an einer Mautstelle implementiert ist, wobei jede Fahrspur einer Art fahrleistungs- oder zeitabhängiger Maut zugeordnet ist.
